Europäisches Patentamt

European Patent Office

Office européen des brevets

(11) Veröffentlichungsnummer: **0 468 142 A2**

# EUROPÄISCHE PATENTANMELDUNG

(21) Anmeldenummer: **91106554.8**

(51) Int. Cl.⁵: **H01S 3/082**, H01S 3/11

(22) Anmeldetag: **24.04.91**

(30) Priorität: **25.07.90 DE 4023571**

(43) Veröffentlichungstag der Anmeldung:
**29.01.92 Patentblatt 92/05**

(84) Benannte Vertragsstaaten:
**DE FR GB NL**

(71) Anmelder: **URANIT GmbH**
**Stetternicher Staatsforst**
**W-5170 Jülich(DE)**

Anmelder: **Max-Planck-Gesellschaft zur**
**Förderung der Wissenschaften e.V.**
**Bunsenstrasse 10**
**W-3400 Göttingen(DE)**

(72) Erfinder: **Bücher, Hermann, Dr.**
**Lohmühlenstrasse 13**
**W-5100 Aachen(DE)**
Erfinder: **Fuss, Werner, Dr.**
**Weidachstrasse 1**
**W-8046 Garching(DE)**
Erfinder: **Schmid, Wolfram E., Dr.**
**Weidachstrasse 10**
**W-8046 Garching(DE)**

(74) Vertreter: **Gottlob, Peter**
**Kernforschungszentrum Karlsruhe GmbH**
**Abt. PAL Weberstrasse 5 Postfach 3640**
**W-7500 Karlsruhe 1(DE)**

(54) **Verfahren zur Erzeugung von Laserstrahlung mit Anteilen verschiedener Wellenlängen synchronisierter und räumlich überlappter Strahlenausbreitung und Mehrwellenlängen CO2-Laser zur Durchführung des Verfahrens.**

(57) Die Erfindung betrifft ein Verfahren und eine Anordnung zur Erzeugung von gepulster Laserstrahlung 5, die Anteile mehrerer frei wählbarer Wellenlängen enthält, deren Emission zeitlich synchronisiert ist und die sich genau räumlich überlappend mit gleichen Strahlparameters auf einer gemeinsamen Fortpflanzungsrichtung ausbreiten. Ein bevorzugtes Ausführungsbeispiel einer Anordnung für ein derartiges Verfahrens ist eine Niederdruck $CO_2$-Lasergasentladung in Verbindung mit einem Mehrwellenlängenresonator mit Güteschaltung.

EP 0 468 142 A2

Die Erfindung betrifft ein Verfahren zur Erzeugung von gepulster Laserstrahlung mit zwei oder mehreren Wellenlängen, bei der die Strahlungsanteile mit zwei unterschiedlichen Wellen-Längen aus dem gleichen Volumen des Lasermediums extrahiert werden und deren Emission synchronisiert und auf einer gemeinsamen Achse und damit räumlich überlappend entlang des Ausbreitungsweges erfolgt.

Gepulste Laser mit Mehrwellenlängenemission werden z.B. für die Mehrphotonenanregung von Gasen zum Zwecke der Isotopentrennung, für die Bestimmung von Schadstoffkonzentrationen nach dem LIDAR Verfahren und für Mehrwellenlängeninterferometrie gebraucht. Für diese Verfahren ist es von Bedeutung, daß sich die Pulse gewählter Wellenlänge in einem gemeinsamen Strahlbündel, also über weite Wegstrecken genau überlappend ausbreiten, genau synchronisiert sind und hohe Pulsspitzenleistung aufweisen.

Verfahren zur Wellenlängenabgestimmten Erzeugung von gepulster oder Mehrwellenlängenlaserstrahlung sind in der Literatur beschrieben. Dabei werden bisher zwei unterschiedliche Vorgehensweisen angewandt, für die die Zitate (1) sowie (2) und (3) beispielhaft angeführt werden. In den Bespielen wird die Laserstrahlung unter Verwendung von TEA-$CO_2$-Laserentladung erzeugt. Hierbei steht das Lasermedium unter einem Fülldruck, bei dem der Energieaustausch zwischen den Rotationsniveaus, die für die Fähigkeit des $CO_2$-Lasergases zur Emission von Strahlung unterschiedlicher Wellenlänge von Bedeutung sind, sehr schnell erfolgt. Dies hat zur Folge, daß beim Anschwingen einer Laserlinie die Besetzung aller oberen Lasernieveaus abnimmt und die aller unteren zunimmt; die Inversion verringert sich daher für alle Laserübergänge, sobald eine Laserlinie emittiert wird. Unter derartigen Bedingungen ist eine Mehrwellenlängenemission nicht zu erreichen, da die Strahlung mit den günstigeren Anschwingbedingungen sofort auf Kosten der schwächeren wächst und deren Ausbildung verhindert. Um diese Schwierigkeit zu umgehen, wird in (1) der Laserresonator so ausgebildet, daß die Strahlung unterschiedlicher Wellenlängen aus räumlich getrennten Teilvolumina des Anregungsvolumens extrahiert wird. Dieses Vorgehen hat schwerwiegende Nachteile, da besonders im Falle von nicht benachbarten Linien die optischen Achsen der Teilvolumina nicht dicht nebeneinander liegen und nur ein Bruchteil des gesamten Anregungsvolumens genutzt wird. Für Strahlung mit weit auseinanderliegenden Wellenlängen wird ferner ein Anregungsvolumen mit großen Entladungsquerschnitten benötigt, die nur schwierig zu realisieren sind. In (2) und (3) wird zwar dasselbe Anregungsvolumen benutzt, das in dem allen Wellenlängen gemeinsamen Resonatorarm (1) liegt, jedoch ist hier die Emission auf genau zwei oder auf nicht unabhängig voneiander wählbare Wellenlängenkombinationen beschränkt. Die Vorgehensweise ist in beiden Fällen, die Resonatorgüte für die Wellenlängen so abzustimmen, daß das Produkt auf Verstärkung und Resonatorverlust für alle emittierten Wellenlängen soweit gleich ist, daß kein Wellenlängenanteil auf Kosten der anderen wächst.

In neuerer Zeit werden zur Erzeugung von gepulster $CO_2$-Laserstrahlung gütegeschaltete Niederdruckdauerstrichlaser entwickelt (Druck des Lasergases p < 100 hPa) und mit Erfolg anstelle von TEA-Lasern (p >> 100 hPA) z.B. für Untersuchungen zur Isotopentrennung von Kohlenstoff eingesetzt (4). Man erhofft sich von der Verwendung dieser Technik Laser, die zuverlässiger als TEA-Laser sind, da sie die anfällige Hochspannungsentladung vermeiden und auf die ausgereifte Technologie von Industrielasern für die Materialbearbeitung zurückgreifen. Die Ergebnisse in (1) zeigen, daß die Verwendung von Mehrwellenlängenstrahlung für die Isotopentrennung von $^{13}$C vorteilhaft ist. Daher erscheint auch die Erzeugung von Mehrwellenlängenstrahlung mit gütegeschalteten Niederdrucklaser wünschenswert.

Experimente zeigen, daß mit solchen Lasern auf einfache Weise ein Verfahren zur Erzeugung von Mehrwellenlängenstrahlung bereitgestellt werden kann, die die Forderung nach räumlicher Überlappung und Synchronisation erfüllen. Aufgrund des geringen Arbeitsdrucks des Lasermediums sind die Rotationsniveaus nur gering gekoppelt und der Energieaustausch zwischen ihnen erfolgt langsam gegen die Anschwingdauer der Pulse und die Pulsdauer. Beim Betrieb mit nur einer Wellenlänge bleibt ein beträchtlicher Teil der Anregungsenergie in den nicht abgerufenen Rotationslinien des invertierten Schwingungsniveaus zurück. Wird ein solcher Laser mit einem weiter unten beschriebenen Resonator ausgestattet, der das Anschwingen auch mehrerer Wellenlängen ermöglicht, werden im Ausgangspuls des Lasers Anteile mit den entsprechenden Wellenlängen beobachtet, und die Ausgangsenergie des Laserpulses ist höher als beim Einwellenlängenbetrieb. Dabei entfallen alle Einschränkungen bezüglich der Anzahl und Auswahl der in einem Puls ermittierten Wellenlängen und es sind keine Entladungsvolumina mit besonders großen Entladungsquerschnitten erforderlich. Durch seine andersartige Funktionsweise werden die für die Verwendung von TEA-Lasern beschriebenen prinzipiellen Einschränkungen bei der Erzeugung von Mehrwellenlängenstrahlung umgangen.

Erfindungsgemäß wird die Erzeugung von Mehrwellenlängenstrahlung mit den genannten Eigenschaften dadurch erreicht, daß ein Lasermedium verwendet wird, bei dem während der Anschwingdauer der Emission einer Wellenlänge kein wesentlicher Energieaustausch zwischen den Laserniveaus stattfindet und daher Besetzungsinversion und damit die Anschwingbedingungen für weitere Wellenlängen nicht oder nur geringfügig beeinflußt werden. Dies ist bei Niederdruck $CO_2$-Lasern der Fall. Ein bevorzugtes Beispiel für ein derartiges Lasermesium ist daher eine $CO_2$-Lasergasentladung mit Drücken p < 100 hpa.

Die Voraussetzung für Mehrwellenlängenemission ist, daß die entsprechenden Laserniveaus invertiert sind. Die Bevölkerung der Niveaus erfolgt aber weniger durch ein direktes Pumpen als vielmehr durch Verteilung der Energie aus einem oder wenigen bevorzugt gepumpten Niveaus, die voraussetzungsgemäß langsam ist. Das bedeutet, daß der Aufbau der Inversion aller Laserniveaus sofort aufhört, wenn die Inversion des bevorzugt gepumten Niveaus infolge des Anschwingen nicht weiter steigt. Es muß also während des Pumpens sichergestellt werden, daß der Laser erst nach Erreichen der Maximalinversion anschwingt. Das geeignete Mittel hierfür ist eine Resonatorgüteschaltung, die die Resonatorgüte während des Pumpens so niedrig hält, daß der Laser nicht anschwingen kann. Die Güteschaltung des Resonators ist daher ein weiteres Kennzeichen des Verfahrens. Mit dem in (4) beschriebenen Laser, dessen Resonator um die Möglichkeiten der Mehrwellenlängenauswahl erweitert wurde, konnte die Erzeugung von Mehrwellenlängenstrahlung nach diesem Verfahren demonstriert werden. Die Kombination dieser beiden Kennzeichen zur Erzeugung von gepulster Mehrwellenlängenstrahlung ist neu und bisher nicht bekannt. Es ist offensichtlich, daß das Verfahren nicht auf die Verwendung von $CO_2$-Lasergas mit Niederdruckentladung beschränkt ist, vielmehr werden sich alle Lasermedien mit fehlender oder schwacher Austauschrate der Energie zwischen den Laserniveaus dafür eignen.

Eine weitere Verkürzung der Laserpulse und damit eine Erhöhung der Spitzenleistung ist für viele nichtlineare Prozesse wie z. B. Fotochemie, Isotopentrennung oder Ramamverschiebung von großem Vorteil. Bei gepulsten Lasern erreicht man diesen Effekt üblicherweise durch die Kopplung der longitudinalen Moden, wobei bei den üblichen Resonatorlängen eine Pulskette aus zahlreichen Pulsen entsteht. Der Abstand zweier aufeinanderfolgender Pulse entspricht der Resonatorumlaufzeit, die Dauer der Pulskette im wesentlichen der Pulsdauer ohne Modenkopplung. In dem hier beanspruchten Verfahren wird die Länge des Resonators so weit verlängert, daß die Pulskette nur noch aus einem oder wenigen Pulsen besteht. Dadurch wird die Energie in einem einzigen oder in einem Hauptpuls mit nur unwesentlichen Vor- und Nachläufern konzentriert. Die Spitzenleistung wird dadurch weiter gesteigert. Das Verfahren liefert aber nur dann reproduzierbare Pulse, wenn Modenkoppeln und Gütschalten zeitlich synchronisiert sind, da nur dann die zeitliche Lage des gewünschten Hauptpulses kontrolliert werden kann, und damit das Auftreten mehrerer vergleichbar großer Pulse verhindert wird.

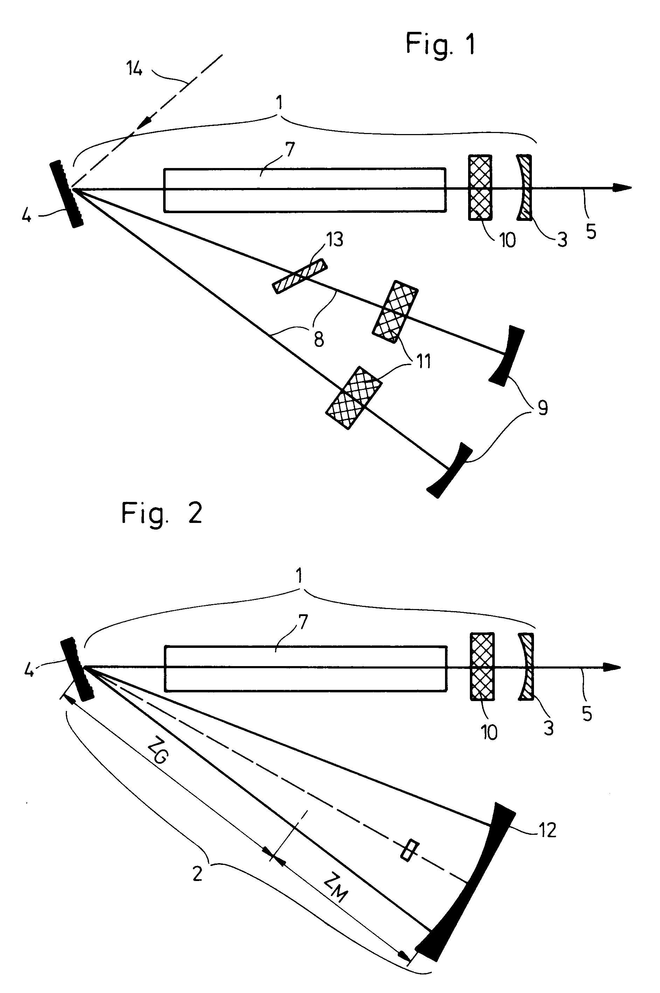

Die Erfindung wird nachstehend anhand der in den Figuren 1 und 2 erläuterten Ausführungsform beschrieben.

Figur 1 zeigt schematisch einen Laseraufbau. Der Resonator 1 mit Mehrwellenlängenabstimmung besteht aus einem allen Wellenlängen gemeinsamen Arm 1 und mehreren Wellenlängen bestimmenden Armen 2. Der Arm 1 besteht aus dem teildurchlässigen Auskoppelspiegel 3, durch den der Mehrwellenlängenstrahl 5 aus dem Resonator 1 austritt, und dem Beugungsgitter 4, das so orientiert ist, daß die aus dem Lasermedium 7 im Resonatorraum 1 auftreffende Strahlung in Teilbündel 8 verschiedener Wellenlängen aufgefächert wird. Die Resonatorendspiegel 9 werden so gewählt und aufgestellt, daß die jeweils auf sie treffenden Strahlen der Wellenlänge $_i$ genau in sich reflektiert werden. Das Lasermedium 7 ist z.B. die Niederdruckentladung eines kommerziellen Materialbearbeitungslasers. Die Auswahl der gewünschten Wellenlängen erfolgt durch Einsetzen und Ausrichten des entsprechenden Spiegels 9. Der Güteschalter 10 befindet sich entweder in dem Arm 1 oder es werden synchronisierte Güteschalter 11 in den einzelnen Wellenlängenarmen 8 verwendet. Als Güteschalter 10, 11 sind rotierende Scheiben mit Öffnungen, Zerhackerblätter, geeignet. Die Positionierung in den Armen 2 ist z.B. dann bevorzugt, wenn die Güteschaltung zusätzlich zur Erzeugung von Pulsfolgen mit ausgewählten Wellenlängenkombinationen herangezogen werden soll, was andernfalls nur durch aufwendiges Verstellen der Endspiegeln 9 und kaum mit hoher Repetitionsrate erreichbar ist.

Figur 2 zeigt eine spezielle Ausführungsform, bei der nur ein allen Wellenlängen $_n$ gemeinsamer Endspiegel 12 verwendet wird. Die Bedingungen dafür, daß dieser Spiegel 12 für alle Wellenlängen Rückkopplungsbedingung erfüllt, lauten:

1. Der Krümmungsmittelpunkt des Spiegels 12 muß auf dem Beugungsgitter 4 liegen und
2. Der Krümmradius des Spiegels 12 muß mit dem Radius der Wellenfront am Spiegelaufstellungsort übereinstimmen.

Beide Bedingungen sind erfüllt, wenn für den Abstand Gitter 4 bis Spiegel = 12 $Z_g + Z_M$ ist und die Teilstrecken die Bedingungen $Z_g \cdot Z_M = L^2_R$ erfüllen. Hierbei ist die Länge $L_R$ die für einen optischen Resonator charakteristische Größe, die Rayleighlänge genannt wird. Diese Ausführungsform wird vorzugsweise dann verwendet, wenn die gewünschten Wellenlängen benachbart sind. Unerwünschte Wellenlängen werden durch Blockieren des entsprechenden Resonatorarmes 2 unterdrückt.

Der gegebenenfalls erforderliche Abgleich eines relativen Zeitverzuges und der Intensitätsverhältnisse der Pulse ausgewählter Wellenlängen erfolgt in beiden Ausführungsformen durch kontrolliertes Einbringen von Verlusten 13, z.B. teildurchlässige Spiegel 13 oder Blenden 13, im Resonatorarm 2 der entsprechenden Wellenlänge. Im Falle der Ausführung nach Figur 1 kann auch der Reflektionsgrad des entsprechenden Endspiegels 9 dafür herangezogen werden. Für den Fall, daß das Anschwingverhalten durch Einstrahlung von Hilfsstrahlung 14 beeinflußt werden soll, kann diese beispielsweise über das Gitter 4 in der entsprechenden negativen Beugungsordnung erfolgen.

Mehrwellenlängenstrahlung mit den gewünschten Eigenschaften wurde erfolgreich demonstriert. Dabei zeigt sich, daß die Ausgangsenergie der Anordnung bei Mehrwellenlängenbetrieb zunimmt, da jetzt auch die Inversion in Laserstrahlung umgewandelt wird, die ansonsten während der Pulsdauer von 200 - 300 ns wegen des kaum stattfindenden Energieaustausches in den nicht abgerufenen Niveaus verbleibt.

## Bezugszeichenliste

| | |
|---|---|
| 1 | gemeinsamer Arm, Resonator, Resonatorarm |
| 2 | Arme, Resonatorarm |
| 3 | Auskoppelspiegel |
| 4 | Beugungsgitter |
| 5 | Mehrwellenlängenstrahl, gepulste Laserstrahlung |
| 6 | |
| 7 | Lasermedium |
| 8 | Teilbündel |
| 9 | Resonatorendspiegel, Spiegel, Endspiegel |
| 10 | Güteschalter, Resonatorgüteschaltung |
| 11 | synchronisierter Güteschalter |
| 12 | gemeinsamer Endspiegel, Spiegel |
| 13 | Verluste,teildurchlässeiger Spiegel, Blenden |
| 14 | Hilfsstrahlung |

## Literatur

1. Enhancement of the Selectivity and the Yield in Infrared Multiphoton Dissociation of Molecules in the Multifrequency Infrared Laser Fields
A.V. Evseev et Al., Sov.J.Quantum Electron. 15, 689-691 (1985)
2. Two-color TEA-$CO_2$ Laser Oscillation on the Lines of Regular and Hot Bands
V.V. Churakov et al., Applied Physics B 42, 245-249 (1987)
3. Theoretical and Experimental Studies of a Multiline TEA-$CO_2$-Laserwith Hot $CO_2$ as an Intracavity Absorber
A.K. Nath, U.K. Chatterjee, IEEE J.Quant.Electronics QE-16, 1263-1266 (1980)
4. C.D'Ambrosio, W.Fuss, W.E. Schmid, S. Trushin, K.L. Kompa, New developments in high-power cw discharge multikilohertz repetition rate $CO_2$ lasers
SPIE Vol. 1031 GCL-Seventh International Symposium on Gas Flow and Chemical Lasers, Vienna August 1988, S. 48 - 55

## Patentansprüche

1. Verfahren zur Erzeugung von gepulster Laserstrahlung mit Anteilen verschiedener abgestimmter Wellenlängen, die alle auf einer gemeinsamen Strahlachse, also auf ihrem Fortpflanzungsweg räumlich genau überlappend emittiert werden, dadurch gekennzeicznet, daß
   - ein Lasermedium (7) verwendet wird, das mehrere Laserniveaus besitzt, zwischen denen die Energieaustauschrate klein gegen die Anschwingrate der Laseremission ist;
   - das Anschwingen des Lasers während der Anregung des Lasermediums (7) bis zum Erreichen der für die Lasertätigkeit erforderlichen Inversion aller Laserniveaus durch Resonatorgüteschaltung (10) unterdrückt wird.

2. Verfahren nach Anspruch 1, dadurch gekennzeichnet, daß
   - die Güteschaltung (11) in den jeweiligen, die Wellenlängen auswählenden Teillichtwegen des Resonators und für jede Wellenlänge unabhängig erfolgt.

3. Verfahren nach Anspruch 2, dadurch gekennzeichnet, daß
   - die Auswahl der Wellenlängenkombination in den Puls oder Pulsfolgen durch die Güteschaltung erfolgt.

4. Verfahren nach Anspruch 1 bis 3, dadurch gekennzeichnet, daß
   - die Energie und der relative zeitliche Versatz der Pulsteile verschiedener Wellenlänge einzeln durch Wahl der Güte der gewünschten Wellenlängen auswählenden Teilresonatoren oder durch Injektion von Hilfsstrahlung (14) beinflußt wird.

5. Verfahren nach Anspruch 1 bis 5, dadurch gekennzeichnet, daß

- die erzeugten gütegeschalteten Pulse durch Modenkopplung weiter verkürzt werden, um die Pulsspitzenleistung zu erhöhen;
- die durch Modenkopplung entstandene Pulskette nur aus einem oder wenigen Pulsen besteht und so die Laserenergie im wesentlichen in einem oder in wenigen kurzen Pulsen konzentriert ist und der Zeitpunkt des Entstehens dieser Pulse durch Synchronisation von Modenkopplung und Güteschaltung kontrolliert wird.

6. Mehrwellenlängenlaser mit einem Mehrwellenlängenresonator, bei dem die für die Lasertätigkeit notwendigen Rückkopplungsbedingungen für eine Vielzahl von Wellenlängen unabhängig voneinander wählbar sind, dadurch gekennzeichnet, daß

- das Lasermedium (7) eine Niederdruck $CO_2$-Lasergasentladung ist;
- der Resonator (1, 2) mindestens einen Güteschalter hat.

7. Mehrwellenlängenlaser nach Anspruch 6, dadurch gekennzeichnet, daß

- der die Wellenlängen bestimmende Arm des Resonators (1, 2) aus einem Gitter (4) und genau einem Konkavspiegel (12) besteht, deren gegenseitige Aufteilung derart ist, daß der Krümmugnsmittelpunkt des Spiegels auf der Gitterfläche liegt und die Krümmung des Spiegels derjenigen der Wellenfront der Strahlung aus dem Spiegelort gleicht.

## Fig. 1

## Fig. 2